Europäisches Patentamt

European Patent Office

Office européen des brevets

(19)

(11) EP 0 454 082 B1

(12) EUROPEAN PATENT SPECIFICATION

(45) Date of publication and mention
of the grant of the patent:
30.07.1997 Bulletin 1997/31

(51) Int Cl.⁶: $H04N\ 1/40$, $G06T\ 5/00$

(21) Application number: 91106582.9

(22) Date of filing: 24.04.1991

(54) **Image contour enhancing device**

Bildkonturverbesserungsvorrichtung

Dispositif pour améliorer les contours d'images

(84) Designated Contracting States:
DE FR GB

(30) Priority: 24.04.1990 JP 109354/90

(43) Date of publication of application:
30.10.1991 Bulletin 1991/44

(73) Proprietor: **MATSUSHITA ELECTRIC INDUSTRIAL CO., LTD.**
Kadoma-shi, Osaka-fu 571 (JP)

(72) Inventors:
• **Yamashita, Haruo**
Osaka-shi, Osaka-fu (JP)
• **Ishihara, Hideshi**
Takatsuki-shi, Osaka-fu (JP)
• **Matsumoto, Yasuki**
Hirakata-shi, Osaka-fu (JP)

(74) Representative: **Eisenführ, Speiser & Partner**
**Martinistrasse 24**
**28195 Bremen (DE)**

(56) References cited:
**US-A- 4 618 990**

**Description**

**BACKGROUND OF THE INVENTION**

**1. Field of the Invention**

The present invention generally relates to an image signal processing device, and more particularly, to an image contour enhancing device which is capable of improving the resolution at the image contour by processing the color difference signals of such as NTSC system and input image signals of video printers.

**2. Description of the Prior Art**

Recently, accompanying the development of hard copy technique, particularly hard copy technique of full color, it has become possible to reproduce a high fidelity image by using a copy-printing technique such as a sublime type thermal copying technique. In respect of the color reproduction, a reproducing ability equivalent to the silver print has been reached by dint of recording material and the image processing. In respect of the resolution, the level of the silver print is being approached by using a highly minute image signal such as a high-vision signal.

However, in a video printer for recording TV signal of the current system, even if the resolution of the printer is high, the resolution thereof is restricted by the band restriction of the image signal in NTSC system, etc., and therefore in the present circumstance, a resolution sufficient for the recording image can not be obtained. Particularly, in the color difference signal of the image signal, since the band width thereof is considerably limited as compared with the brightness signal, the horizontal resolution is extremely low such as several tens of lines, there has been such a problem that color blurring is caused in the record image.

Conventionally, the apparent resolution of the image has been improved by way of, for example, by (1) a method of raising the gain of the high band frequency, or by (2) a method of emphasizing the contour by taking a Laplacian of the second order differentiation.

Method (1) of raising the gain of the high band frequency is literally a method of raising the gain of the high band part as compared with the low band part so as to emphasize the image of the high band part.

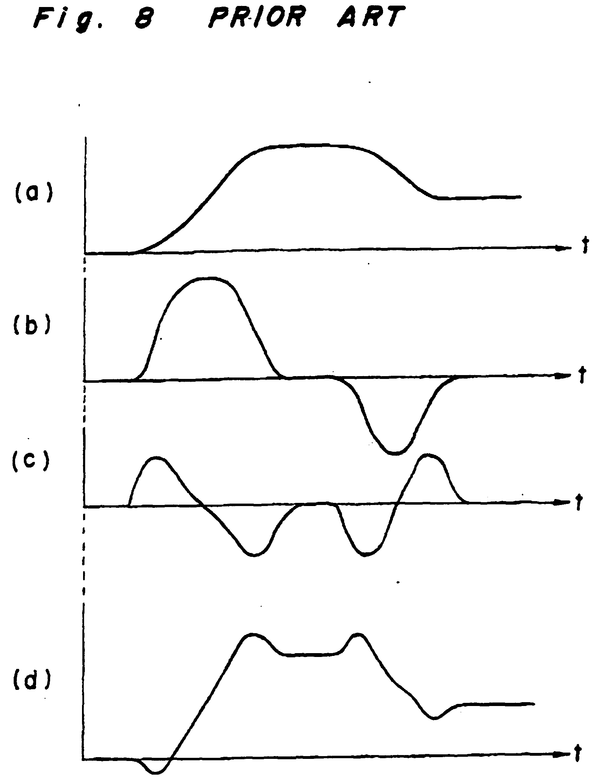

Method (2) of emphasizing the contour will be described with reference to Fig. 8.

In Fig. 8, curve (a) shows a waveform of an input image signal, curve (b) shows a differential waveform representing the contour of the image by differentiating the curve (a), and the curve (c) is a second order differential waveform obtained by further differentiating the curve (b). The second order differential waveform formed in this manner corresponds to a higher harmonic components extracted from the input signal (a). The curve (d) was obtained by reversing the second order differential waveform (c) after a suitable amplification and adding the result to the input image signal (a). The obtained contour-enhanced image signal (d) accompanies preshoots and overshoots at the rising and falling portions which eventually result in enhancing the contour of the image signal, thus improving the apparent resolution.

In the picture image devices such as a television and VCR, the above-mentioned contour enhancing method is arranged to make a second order differential waveform by a delay line or an LC circuit thereby enhancing the contour by an analog circuit. Meanwhile in the digital image processing devices, the method is arranged to obtain the second order differential waveform by the use of a Laplacian operator, etc., as a spacial filter so as to effect the contour enhancing processing. The adding of preshoots and overshoots to the contour of the image signal results in increasing of the amplification of the high frequency component.

Such a contour enhancing method is similar to the unsharp masking conventionally used for a long time in the image reading devices.

However, method (1) has a problem that the S/N ratio is deteriorated because the high band noise component is amplified.

Also, method (2) also results in a problem of deterioration of S/N ratio because the noise signal in the high frequency region is amplified as in method (1).

In addition, although the preshoot and overshoot of the contour part added in the conventional contour enhancing method has an effect of providing accents to the contour so as to improve the resolution using the luminance signal, the preshoots and overshoots adversely affects when the conventional contour enhancing method (2) is used with the use of color data. This is because the added preshoots and overshoots changes the hue and tint, resulting in unnatural changes in the color at the contour. For example, by the preshoots and overshoots, a contour changing from red to yellow would result in an unnatural contour changing from red, purple, yellowish green, and yellow, resulting in such a problem that the contour enhancing does not improve the resolution.

Furthermore, in the case of applying the conventional contour enhancing to the contour enhancing of the input signal of an image printer, since the highlight and shade width of the printer is restricted by the color of the recording paper and the maximum recording tint and shade of the printer, the dynamic range thereof is narrower as compared with that of CRT and the like, the preshoot and overshoot are consequently cut off, resulting in a problem that the contour enhancing does not nearly become effective.

From US-A-4 618 990, it is known an edge enhancement filtering device for digital fluorography images. For edge enhancement of a digitized fluorographic image, the original image is stored in a full frame memory. When each video vertical blanking pulse occurs time delays are initiated corresponding to shifting whole lines of pixels successively to the left and right and up and down by integral numbers before the pixels are read out of memory. As the pixels are read out for each vertical blanking cycle, they are multiplied by a coefficient related to the pixel shift number, and the result is added to image data from preceding cycles which are summed and stored in a second memory, and the new result is returned to the second memory. The final result is an edge map in the second memory constituting digital values corresponding to the frequency components at edges. These are added to corresponding pixels in the original image, resulting in higher and sharper edges in a final digital image. The image is then converted to analog video signals to permit display on a video monitor.

## SUMMARY OF THE INVENTION

In view of these problems, an essential object of the present invention is to provide an image processing device which is free from the deterioration of S/N ratio and unnatural hue changes in a color signal, and is capable of effecting an effective resolution improvement within the printing dynamic range in the application to printers.

In order to accomplish the above-described object, according to the present invention, an image contour enhancing device for enhancing contours in images in an image data formed by a plurality of pixel data, according to a first aspect of the present invention, the image contour enhancing device comprises: a first differentiation means for differentiating the image data to produce a first order differentiated signal representing an image data portion corresponding to a contour; an absolute means for taking an absolute of the first order differentiated signal to produce an absolute signal representing front and rear edges of the contour; a second differentiation means for differentiating the absolute signal to produce a time modulation signal representing first and second half portions of each of the front and rear edges of the contour; and a time modulation means for modulation in time domain the image data in response to the time modulation signal such that the first half portion of the front and rear edges of the contour is delayed, and the second half portion of the front and rear edges of the contour is advanced.

Furthermore, according to a second aspect to the present invention, the image contour enhancing device comprises a first differentiation means for differentiating said image data to produce a first order differentiated signal representing an image data portion corresponding to a contour, a first comparing means for detecting the polarity of said first order differentiated signal and for producing an output indicating the polarity of said first order differentiated signal, a second differentiation means for differentiating said first order differentiated signal to produce, with the use of the detection result of said first comparing means a time modulation signal representing first and second half portions of each of said front and rear edges of said contour, a second comparison means for comparing the output of said second differentiation means with a positive threshold and a negative threshold and for producing a first output when said time modulation signal exceeds a positive threshold and a second output when said time modulation signal falls below a negative threshold, a delay means for delaying said image data serially in a plurality of stages and for producing a plurality of delayed outputs and a non-delayed output, and a selection means for receiving said outputs from said delay means and said non-delayed output and for selecting one of said outputs in accordance with a predetermined combination of said outputs from said first and second comparison means.

## BRIEF DESCRIPTION OF THE DRAWINGS

These and other objects and features of the present invention will become clear from the following description taken in conjunction with the preferred embodiments thereof with reference to the accompanying drawings throughout which like parts are designated by like reference numerals, and in which:

Fig. 1 is a block diagram of an image signal processing device according to a preferred embodiment of the present invention;
Fig. 2 is a block diagram showing constitution of a first preferred embodiment of the time axis modulation means of the present invention;
Fig. 3 is a waveform chart for explaining the operation;
Fig. 4 is a diagram showing the time axis modulation characteristic;
Fig. 5 is a block diagram showing constitution of a second preferred embodiment of the time axis modulation means of the present invention;
Fig. 6 is a block diagram showing constitution of an image signal processing device according to another preferred embodiment of the present invention;

Fig. 7 is a waveform diagram of each portion for explaining the operation of the preferred embodiment of Fig. 6; and Fig. 8 is a waveform diagram for explaining the operation of the conventional device.

## DETAILED DESCRIPTION OF THE PREFERRED EMBODIMENTS

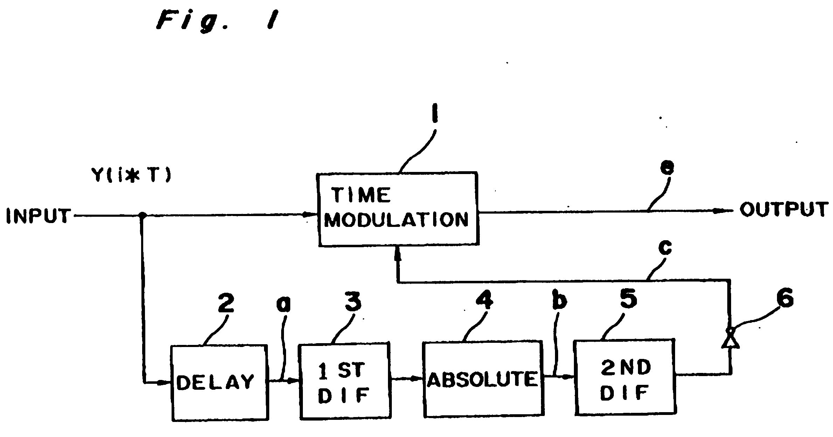

Referring to Fig. 1, a block diagram of an image contour enhancing device is shown which is for enhancing the contour of an image by decreasing the color blurring accomplished for example by improving the resolution of the color difference signal. The input signal Y(i*T) thereto is, for example, a digital color difference signal obtained by demodulating an image signal of NTSC system or the like to the brightness signal and color difference signal. The digital color difference signal is sampled by a clock signal synchronized with the sub-carrier.

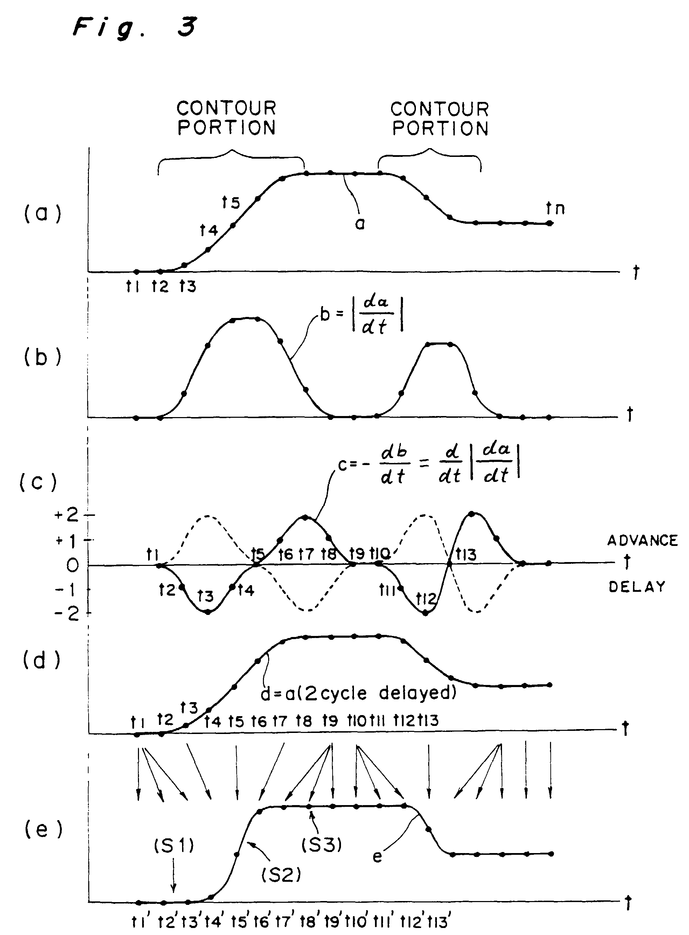

The image contour enhancing circuit shown in Fig.1 includes a time modulation circuit 1 which receives an input signal Y(i*T), a delay circuit 2 which produces a two-sampling cycle delayed signal a such as shown in Fig. 3 to effect teh same amount of delay as that effected in time modulation circuit 1, a first differentiation circuit 3 for differentiating the signal a, an absolute calculation circuit 4 for taking an absolute of a(d/dt) to produce an absolute first order differentiated signal d shown in Fig. 3, and a second differentiation circuit 5 for differentiating the signal b to produce a second order differentiated signal and an invertor 6 for inverting the second order differentiated signal to produce a time modulation signal c as shown in Fig. 3.

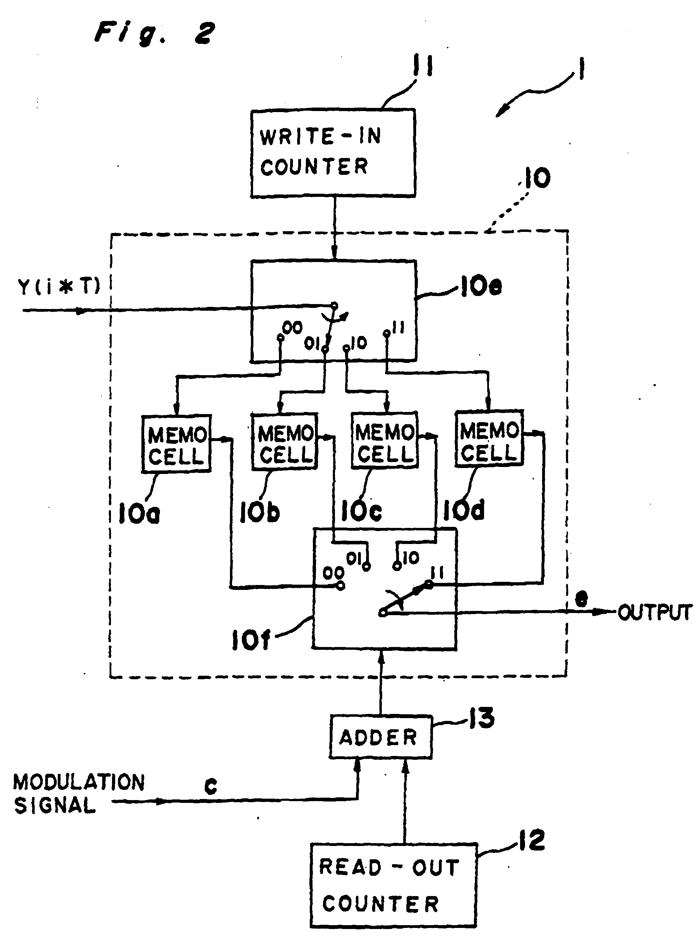

Referring to Fig. 2, the time modulation circuit 1 is diagrammatically shown which includes a memory circuit 10, a write-in counter 11, a read-out counter 12 and an adder 13.

The memory circuit 10 includes at least four memory cells 10a, 10b, 10c and 10d each having enough capacity to store one sampled pixel data. A write-switching circuit 10e is provided which has an arm for receiving the input signal Y(i*T), in which T is a sampling cycle period and i is a number of occurrence of the sampling, and four output terminals indicated as 00, 01, 10 and 11. A read-switching circuit 10f is provided which has four input terminals indicated as 00, 01, 10 and 11 and an arm for producing a time modulated signal e. The arm of the write-switching circuit 10e is driven by the write-in counter 11, and the arm of the read-switching circuit 10f is driven by the adder 13 coupled with the read-out counter 12.

In operation, 2-bit write-in counter 11 sequentially produces drive signal 00, 01, 10, 11, 00, 01, 10, 11, ... (repeat) .., in a predetermined sampling frequency. Thus, the pixel data Y(i*T) are sequentially supplied through terminals 00, 01, 10 and 11 in memory cells 10a, 10b, 10c and 10d, with the old pixel data in memory cells being overwritten by a new pixel data. In the description hereinbelow, the memory cells 10a, 10b, 10c and 10d carrying one previous pixel data are indicated as 10a', 10b', 10c' and 10d', respectively. In this manner, four past pixel data sampled in four past sampling cycles are available in memory cells 10a, 10b, 10c and 10d.

In a synchronized relationship with the write-in counter 11, 2-bit read-out counter 12 sequentially produces drive signal 10, 11, 00, 01, 10, 11, 00, 01, ... (repeat) .... which is delayed by two sampling cycle periods with respect to the drive signal from the write-in counter.

When the modulation signal c is zero, the drive signal produced from adder 13 is identical to the signal produced from read-out counter 12, which is two sampling cycle periods behind. Thus, for example, at a time when the write-in drive signal is 01 for storing a pixel data in memory cell 10b, the read-out drive signal is 11 for reading a pixel data in memory cell 10d' which is stored two sampling cycle periods before. Thus, the read out pixel data d is delayed by two sampling cycle periods with respect to the original input pixel data Y(i*T), and is identical to the pixel data a.

Therefore, if the modulation signal c=0 continues, the drive signal from adder 13, which is identical to that produced from read-out counter 12, causes sequential read out of the pixel data from the memory cells 10c', 10d', 10a and 10b. In the first embodiment, the output signal with the modulation signal c=0 is used as a reference signal, which is delayed by two sampling cycles with respect to the input signal Y(i*T).

When the modulation signal c is +1, the drive signal produced from adder 13 is advanced by one sampling cycle period. Thus, the read out pixel data e is advanced by one sampling cycle periods with respect to the reference signal.

When the modulation signal c is +2, the drive signal produced from adder 13 is advanced by two sampling cycle periods. Thus, the read out pixel data e is advanced by two sampling cycle periods with respect to the reference signal. In this case, the sampled and stored pixel data in the memory cells are immediately read out with out any substantial delay. Thus, the read out pixel data e is substantially a non-delayed and non-advanced pixel data with respect to the original input pixel data Y(i*T). There may be a very small delay due to the difference in the selection of an effective triggering edge, whether the leading or trailing edge of the driving pulse is used, between the write-switching circuit 10e and read-switching circuit 10f.

When the modulation signal c is -1, the drive signal produced from adder 13 is delayed by one sampling cycle period. Thus, the read out pixel data e is delayed by one sampling cycle period with respect to the reference signal.

When the modulation signal c is -2, the drive signal produced from adder 13 is delayed by two sampling cycle periods. Thus, the read out pixel data e is delayed by two sampling cycle periods with respect to the reference signal.

The above relationship is shown in Table 1 below.

Table 1

| Sampling time | t-1 | t0 | t1 | t2 | t3 | t4 | t5 | t6 |
|---|---|---|---|---|---|---|---|---|
| Write | 10a' | 10b' | 10c' | 10d' | 10a | 10b | 10c | 10d |
| Read (0) | 10c" | 10d" | 10a' | 10b' | 10c' | 10d' | 10a | 10b |
| Read (+1) | 10d" | 10a' | 10b' | 10c' | 10d' | 10a | 10b | 10c |
| Read (+2) | 10a' | 10b' | 10c' | 10d' | 10a | 10b | 10c | 10d |
| Read (-1) | 10b" | 10c" | 10d" | 10a' | 10b' | 10c' | 10d' | 10a |
| Read -2 | 10a" | 10b" | 10c" | 10d" | 10a' | 10b' | 10c' | 10d' |

* The number in parentheses represents the modulation signal c. * The prim ' indicates four previous sampling cycles, and " indicates further four previous sampling cycles.

Referring back to Fig. 1, the operation for making the modulation signal c is described. The delay circuit 2 is provided for counterbalancing the average delay in the time modulation circuit 1 and produces a signal a as shown in Fig. 3, in which t1, t2, ...tn respectively designate the sampling times. In signal a, the rising and falling portions are the portion where the color changes, that is where the contour of the image is located.

The first differentiation circuit 3 takes a differentiation of signal a. The differentiation is accomplished by calculating a difference between two sampling data, and the obtained difference is divided by the sampling cycle period T. In other words, in the first differentiation circuit 3, the following calculation (1) is carried out.

$$Y'(i*T) = \{Y((i + 1)*T) - Y(i*T)\}/T \qquad (1)$$

wherein, $Y(i*T)$ is the ith sampled data, (i being a positive integer), and T is a sampling cycle period, $Y((i+1)*T)$ is the (i+1)th sampled data, and $Y'(i*T)$ is a derivative representing the partial differential of the signal.

The absolute calculation circuit 4 takes an absolute of the signal from the first differentiation circuit 3 to produce signal b, as shown in Fig. 3.

The second differentiation circuit 5 takes a differentiation of signal b in a similar manner to the first differentiation circuit 3, and produces a second order differentiated signal which is inverted by invertor 6 to produce the modulation signal c.

When the signals a and c are compared, the modulation signal c takes a negative value both at times when signal a starts to rise and starts to fall (that is, at the first half portion of the contour of the image), and takes a positive value both at times when signal a reaches the rising end portion and the falling end portion (that is, at the latter part of the contour of the image). Therefore, signal c is used as a modulation signal for advancing (or expanding) and delaying (or compressing) the original input signal, as will be described in detail below.

In Fig. 3, signal d is equal to signal a, both are delayed by two sampling cycles. Signal d is obtained when the drive signal from the read-out counter 12 is used without any modification in adder 3, i.e., c=0, and shows a non-compressed non-expanded signal.

It is to be noted here that the sampling times t1, t2, t3, ... shown in connection with signal d represent write-in sampling times effected by write-switching circuit 10e, and sampling times t1', t2', t3', ... shown in connection with signal e represent read-out sampling times effected by read-switching circuit 10f.

At sampling time t1, since the time modulation signal is such that c=0, signal d is produced as it is from read-switching circuit 10f. In other words, pixel data "Read (0)" at time t1 in Table 1, which is 10a', is used.

At sampling time t2, since the time modulation signal is such that c=-1, signal d is delayed by one sampling cycle. Thus, pixel data "Read (-1)" at time t2 in Table 1, which is 10a', is used. Thus, at sampling time t2', the same pixel data as that used in the previous sampling time t1' is used again.

At sampling time t3, since the time modulation signal is such that c=-2, signal d is delayed by two sampling cycles. Thus, pixel data "Read (-2)" at time t3 in Table 1, which is 10a', is used at time t3'. Thus, at sampling time t3', the same pixel data as that used in the previous sampling time t1' is used again.

At sampling time t4, since the time modulation signal is such that c=-1, signal d is delayed by one sampling cycle. At this time, pixel data "Read (-1)" at time t4 in Table 1, which is 10c', is used at time t4'.

By the above delay in the sampling times t1'-t4', the slow rising slope of signal d is changed to a rapid rising slope as in signal e.

At sampling time t5, since the time modulation signal is such that c=0, signal d is used as it is. Thus, pixel data

5

"Read (0)" at time t5 in Table 1, which is 10a, is used.

At sampling time t6, since the time modulation signal is such that c=+1, signal d is advanced by one sampling cycle. Thus, pixel data "Read (+1)" at time t6 in Table 1, which is 10c, is used.

In a similar manner, at sampling times t7 and t8, signal d is advanced by two and one sampling cycles, respectively, so that the top flat portion of the signal d is widened as in signal e, and yet the slopes in signal d are made steep and the corners are made less rounded.

More specifically, at the rising of the signal d, the pixel data is read out with a delay during the first half of the rising corresponding to the first half of the contour of the color difference signal, and with an advance during the latter half of the rising corresponding to the latter half of the contour of the color difference signal. Thus, the rising slope of the signal inclines steeply in the contour corresponding to a region indicated by an arrow (S2), as shown in signal e. In other words, the contour portion of the color difference signal is compressed in time domain, and the portions before and after the contour portion (indicated by arrows (S1) and (S3)) are extended in time domain so as to counterbalance the compressed time.

Also in the falling period of the signal d after t10, since the delayed and advanced data are read out in accordance with the negative and positive values of the modulation signal c, the contour of the falling portion of the color difference signal is compressed in the time domain so as to have a steep inclination, and the portions before and after the contour portion are extended so as to counterbalance the compressed time. Thus, since the contour portion of the color difference signal has a steep slope without any over-shooting or preshooting, the contour portion can be reproduced without any color blurring, resulting in a high resolution.

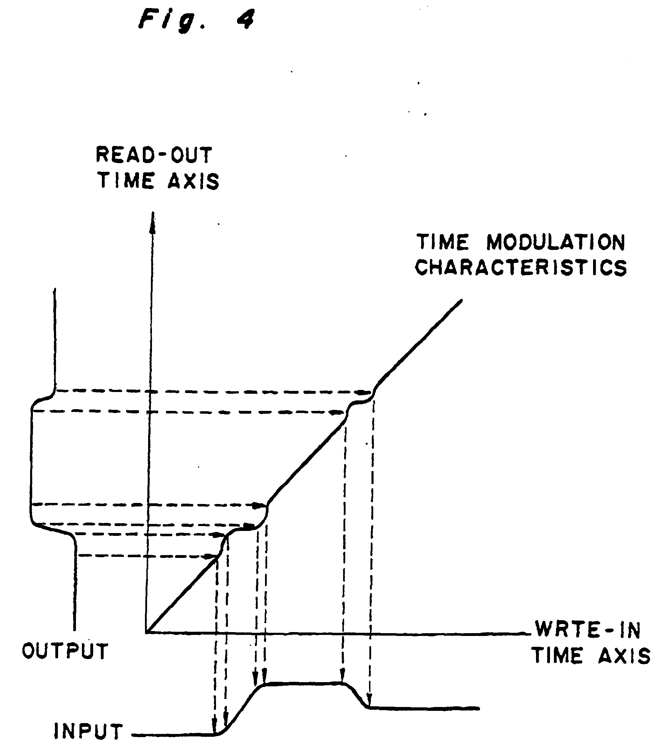

In order to help the further understanding of the above-described time modulation operation, the modulation characteristic of the time modulation circuit 1 is shown in Fig. 4.

In the first embodiment, the reference signal is described as delayed by two sampling cycles, but can be delayed more than two sampling cycles.

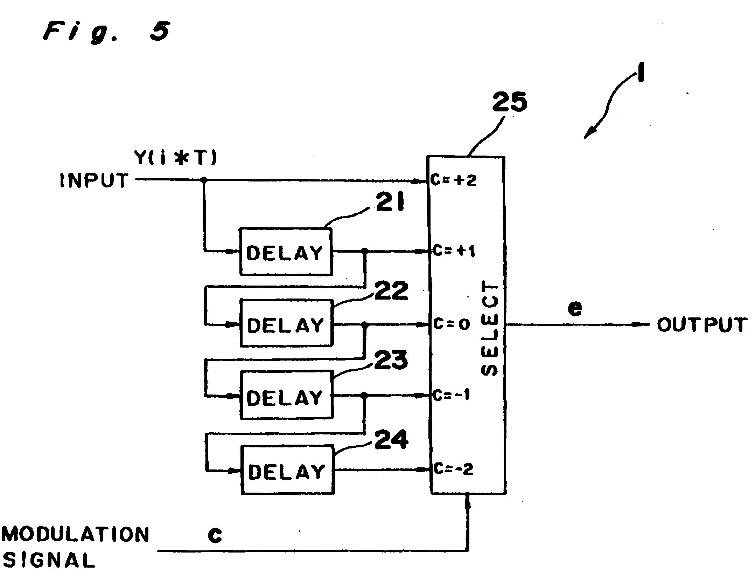

Referring to Fig. 5, a modification of the time modulation circuit 1 is shown, in which reference numerals 21, 22, 23, and 24 are respectively delay circuit, each for delaying an input signal by one sampling cycle period. The delay circuits 21, 22, 23 and 24 are connected in series as in a shift register. Reference numeral 25 is a selector for selecting and passing the input signal of respective outputs from delay circuit 21, 22, 23 and 24 in accordance with the modulation signal c.

In this arrangement, the signal obtained from delay circuit 22 is used as the reference signal and is outputted when the modulation signal is such that c=0. When the modulation signal c is +1 or +2, the signal from delay circuit 21 or the original signal is selected, respectively, to obtain one or two cycle advanced signal. On the other hand, when the modulated signal c is -1 or -2, the signal from delay circuit 23 or 24 is selected, respectively, to obtain one or two cycle delayed signal.

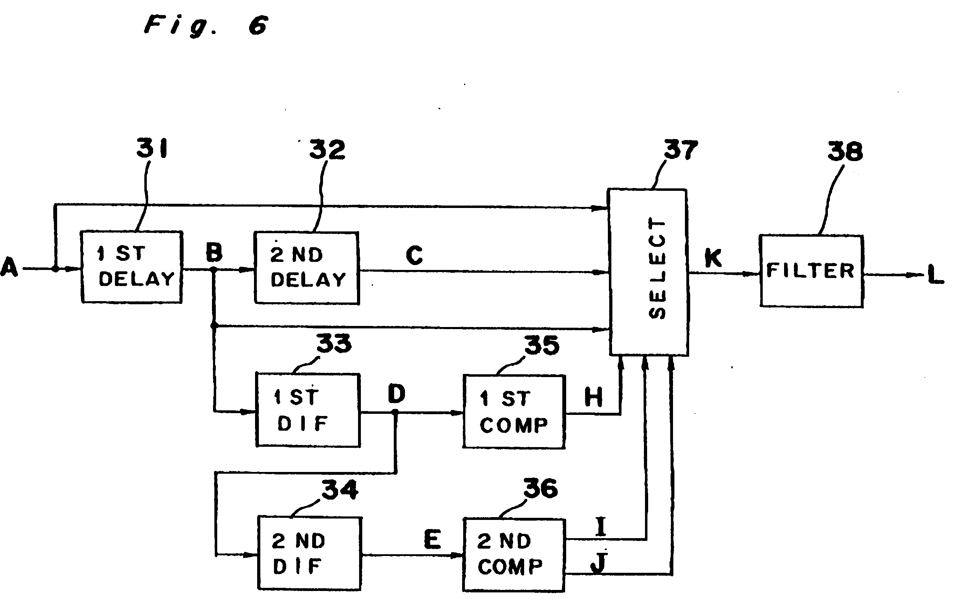

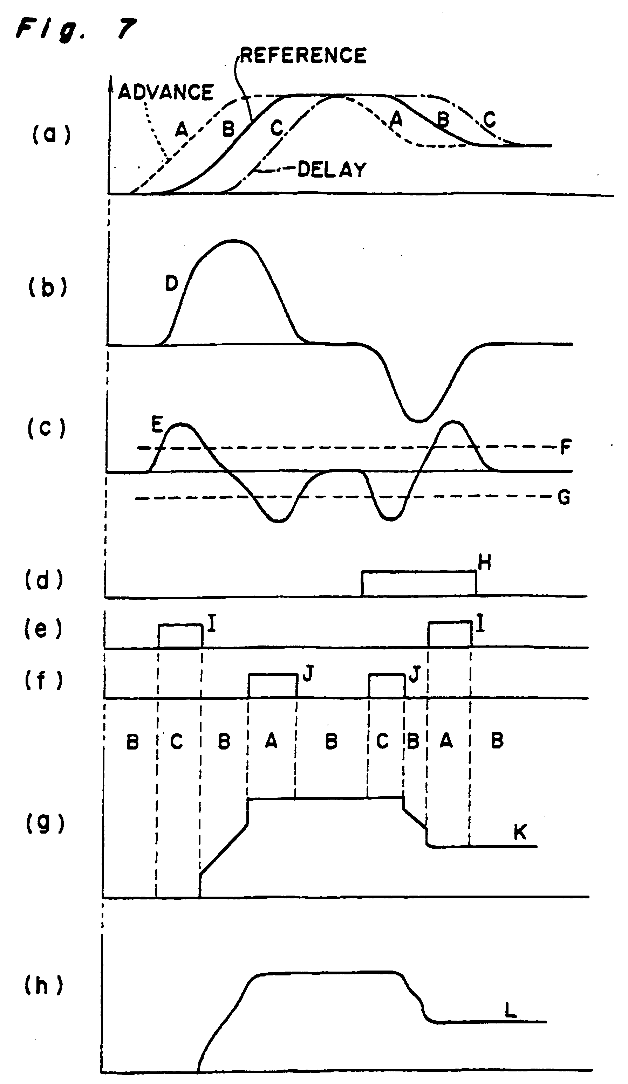

Referring to Fig. 6, an image contour enhancing device according to a second embodiment of the present invention is show, which is suitable for an analog processing system. In Fig. 6, first and second analog delay circuits 31 and 32 are formed by one-pixel data delay line for producing one-pixel data delayed signal B and two-pixel data delayed signal C. Thus, as shown in Fig. 7, the one-pixel data delayed signal B is used as a reference signal, an original signal A is used as an advanced signal, and the two-pixel data delayed signal C is used as a delayed signal.

First and second differentiation circuits 33 and 34 are formed by resistors and capacitors. The first differentiation circuit 33 produces a first differentiated signal D and the second differentiated circuit 34 produces a second order differentiated signal E.

A first comparator 35 is provided for comparing the first differentiated signal D with a zero level and for producing a signal H when signal D is negative. A second comparator 36 is provided for comparing the differentiated signal E with positive and negative thresholds F and G, and produces a signal I when the signal E exceeds above the positive threshold F, and J when the same falls below the negative threshold G.

A selector 37 is formed by analog switches for selectively passing the original signal A, one-pixel data delayed signal B or two-pixel data delayed signal C in accordance with the combination of signals H, I and J shown below in Table 2.

Table 2

| H | I | J | Signal Passed |
|---|---|---|---|
| 0 | 0 | 0 | B |
| 0 | 0 | 1 | A |
| 0 | 1 | 0 | C |
| 1 | 0 | 0 | B |

Table 2 (continued)

| H | I | J | Signal Passed |
|---|---|---|---|
| 1 | 0 | 1 | C |
| 1 | 1 | 0 | A |

When the selector 37 is operated in accordance with Table 2, a signal K is produced, which is smoothed by a low pass filter 38 to obtain a signal L from which higher harmonics are removed.

According to the second embodiment of the present invention, an improvement of the resolution is achieved by steepening the slope of the contour portion of the input signal through a time modulation by using an analog processing. When a precise signal modulation is required, the two or more thresholds in positive and negative regions should be used.

Furthermore, although the preferred embodiment of Fig. 1 uses a digital processing, and the preferred embodiment of Fig. 6 uses an analog processing, the present invention is not limited to these above. For example, the operation in the embodiment of Fig. 6 may be effected by a digital processing. Furthermore, the operation in the first embodiment of Fig. 1 may be effected by an analog processing, in which case the time modulation may be effected by the use of a CCD delay line.

Furthermore, although the above preferred embodiments have been described in connection with the use of the color difference signal as an example, the present invention may be applicable to other signals, such as the brightness signal, RGB signal, the light and shade signal, etc.

As is clear from the foregoing description, since the present invention is adapted to improve the resolution by compressing the time axis of the contour portion so as to steepen the gradient thereof as compared with the conventional contour enhancing by amplifying the minute high band components included in the input signal, the present invention has an excellent effect. For example, the problem that the high band noise component is amplified and results in S/N ratio deterioration does not exist.

Furthermore, conventionally, it has been impossible to apply enhancing onto such a high band component that will not exist in the input signal, but according to the present invention, since the high band component in the input signal can be moved to a further higher band by the time modulation, it becomes possible to realize a contour steeper than conventionally.

In addition, since the gradient itself of the contour portion is steepened without adding preshoots and overshoots to the contour of the image signal, a natural contour enhancing is possible without unnatural color changes in the contour. Furthermore, since neither preshoots nor overshoots are present even when the time modulated signal is applied to an image printer or display device having a narrow dynamic range with respect the contrast, an effective contour enhancing can be effected without departing from the dynamic range.

## Claims

1. An image contour enhancing device for enhancing contours in images in an image data formed by a plurality of pixel data, said image contour enhancing device comprising:

   a first differentiation means (3) for differentiating said image data (a) to produce a first order differentiated signal representing an image data portion corresponding to a contour;
   an absolute means (4) for taking an absolute value of said first order differentiated signal to produce an absolute signal (6) representing front and rear edges of said contour;
   a second differentiation means (5, 6) for differentiating said absolute signal (b) to produce a time modulation signal (c) representing first and second half portions of each of said front and rear edges of said contour; and
   a time modulation means (1) for modulating in time domain said image data in response to said time modulation signal (c) such that the first half portion of said front and rear edges of said contour is delayed, and the second half portion of said front and rear edges of said contour is advanced.

2. An image contour enhancing device as claimed in Claim 1, wherein said time modulation means (1) comprises: a plurality of delay circuits (21, 22, 23, 24) for delaying said image data serially in a plurality of stages and for producing a plurality of delayed outputs and a non-delayed output; and a selection means (25) for receiving outputs from said delay circuits and for selecting one output in accordance with said time modulation signal.

3. An image contour enhancing device as claimed in Claim 1, wherein said time modulation means (1) comprises: a

# EP 0 454 082 B1

memory means (10a, 10b, 10c, 10d) having a plurality of cells for storing a plurality of pixel data of said image data; a write-in counter (11) for producing a write-in address designating said cells for storing said pixel data sequentially in said cells; a read-out counter (12) for producing a read-out address data; and an adding means (13) for adding said read-out address data with said time modulation signal (c) to produce a modified read-out address data designating said cells for reading said pixel data.

4. An image contour enhancing device for enhancing contours in images in an image data formed by a plurality of pixel data, said image contour enhancing device comprising:

a first differentiation means (33) for differentiating said image data to produce a first order differentiated signal (D) representing an image data portion corresponding to a contour;
a first comparing means (35) for detecting the polarity of said first order differentiated signal (D) and for producing an output (H) indicating the polarity of said first order differentiated signal (D);
a second differentiation means (34) for differentiating said first order differentiated signal (D) to produce, with the use of the detection result (H) of said first comparing means (35), a time modulation signal (E) representing first and second half portions of each of said front and rear edges of said contour;
a second comparison means (36) for comparing the output of said second differentiation means (34) with a positive threshold (F) and a negative threshold (G) and for producing a first output (I) when said time modulation signal (E) exceeds a positive threshold (F) and a second output (J) when said time modulation signal (E) falls below a negative threshold (G) ;
a delay means (31, 32) for delaying said image data serially in a plurality of stages and for producing a plurality of delayed outputs and a non-delayed output; and a selection means (37) for receiving said outputs from said delay means (31, 32) and said non-delayed output and for selecting one of said outputs in accordance with a predetermined combination of said outputs (H, I, J) from said first and second comparison means (35, 36).

## Patentansprüche

1. Bildkontur-Verbesserungsvorrichtung zum Verbessern von Konturen in Bildern in Bilddaten, welche aus mehreren Bildpunktdaten gebildet sind, wobei die Bildkontur-Verbesserungsvorrichtung umfaßt:

eine erste Differentiations-Einrichtung (3) zum Differenzieren der Bilddaten (a) zum Erzeugen eines differenzierten Signals erster Ordnung, welches einen Bilddatenteil entsprechend einer Kontur darstellt;
eine Absolutwert-Einrichtung (4) zum Bilden eines Absolutwertes des differenzierten Signals erster Ordnung zum Erzeugen eines Absolutwert-Signals (b), welches die vorderen und hinteren Ränder der Kontur darstellt;
eine zweite Differentiations-Einrichtung (5, 6) zum Differenzieren des Absolutwert-Signals (b) zum Erzeugen eines zeitmodulierten Signals (c), welches die ersten und zweiten halben Teile von jedem der vorderen und hinteren Ränder der Kontur darstellt; und
eine Zeit-Modulationseinrichtung (1) zum Modulieren der Bilddaten im Zeitbereich als Reaktion auf das Zeit-Modulationssignal (c), so daß der erste halbe Teil der vorderen und hinteren Ränder der Kontur verzögert wird und der zweite halbe Teil der vorderen und hinteren Ränder der Kontur voreilt.

2. Bildkontur-Verbesserungsvorrichtung nach Anspruch 1,
bei welcher die Zeit-Modulationseinrichtung (1) umfaßt:

mehrere Verzögerungsschaltungen (21, 22, 23, 24) zum Verzögern der Bilddaten seriell in mehreren Stufen und zum Erzeugen mehrerer verzögerter Ausgangssignale und eines nicht verzögerten Ausgangssignals; und eine Selektionseinrichtung (25) zum Empfangen von Ausgangssignalen von den Verzögerungsschaltungen und zum Selektieren eines Ausgangssignals entsprechend dem Zeit-Modulationssignal.

3. Bildkontur-Verbesserungsvorrichtung nach Anspruch 1,
bei welcher die Zeit-Modulationseinrichtung (1) umfaßt:

eine Speichereinrichtung (10a, 10b, 10c, 10d) mit mehreren Zellen zum Speichern mehrerer Bildpunkt-Daten der Bilddaten;
einen Schreib-Zähler (11) zum Erzeugen einer Schreib-Adresse, welche die Zellen zum sequentiellen Speichern der Bilddaten in den Zellen bezeichnet;
einen Lese-Zähler (12) zum Erzeugen von Lese-Adreßdaten; und

8

eine Addiereinrichtung (13) zum Addieren der Lese-Adreßdaten mit dem Zeit-Modulationssignal (c) zum Erzeugen modifizierter Lese-Adreßdaten, welche die Zellen zum Lesen der Bildpunktdaten bezeichnen.

**4.** Bildkontur-Verbesserungsvorrichtung zum Verbessern von Konturen in Bildern in Bilddaten, welche aus mehreren Bildpunktdaten gebildet sind, wobei die Bildkontur-Verbesserungsvorrichtung umfaßt:

eine erste Differentiationseinrichtung (33) zum Differenzieren der Bilddaten zum Erzeugen eines differenzierten Signals erster Ordnung (D), welches einen Bilddatenteil entsprechend einer Kontur darstellt;

eine erste Vergleichseinrichtung (35) zum Erfassen der Polarität des differenzierten Signals erster Ordnung (D) und zum Erzeugen eines Ausgangssignals (H), welches die Polarität des differenzierten Signals erster Ordnung (D) anzeigt;

eine zweite Differentiationseinrichtung (34) zum Differenzieren des differenzierten Signals erster Ordnung (D) zum Erzeugen eines Zeit-Modulationssignals (E), welches erste und zweite halbe Teile von jedem der vorderen und hinteren Ränder der Kontur darstellt, unter Verwendung des Erfassungsergebnisses (H) der ersten Vergleichseinrichtung (35);

eine zweite Vergleichseinrichtung (36) zum Vergleichen des Ausgangssignals der zweiten Differentiationseinrichtung (34) mit einem positiven Schwellwert (F) und einem negativen Schwellwert (G) und zum Erzeugen eines ersten Ausgangssignals (I), wenn das Zeit-Modulationssignal (E) einen positiven Schwellwert (F) überschreitet, und eines zweiten Ausgangssignals (J), wenn das Zeit-Modulationssignal (E) unter einen negativen Schwellwert (G) fällt;

eine Verzögerungseinrichtung (31, 32) zum Verzögern der Bilddaten seriell in mehreren Stufen und zum Erzeugen mehrerer verzögerter Ausgangssignale und eines nicht verzögerten Ausgangssignals; und

eine Selektionseinrichtung (37) zum Empfangen der Ausgangssignale von der Verzögerungseinrichtung (31, 32) und des nicht verzögerten Ausgangssignals und zum Selektieren von einem der Ausgangssignale entsprechend einer vorbestimmten Kombination der Ausgangssignale (H, I, J) von der ersten und zweiten Vergleichseinrichtung (35, 36).

## Revendications

**1.** Dispositif pour améliorer les contours d'images afin d'améliorer les contours d'images dans une donnée d'image formée par une multitude de données de pixels, ledit dispositif pour améliorer les contours d'images comprenant :

- un premier moyen de différentiation (3) afin de procéder à une différentiation de ladite donnée d'image (a) et produire un signal différentié du premier ordre représentant une partie de donnée d'image qui correspond à un contour;
- un moyen absolu (4) pour prendre une valeur absolue dudit signal différentiée du premier ordre pour produire un signal absolu (6) représentant les bords avant et arrière dudit contour;
- un second moyen de différentiation (5, 6) pour procéder à une différentiation dudit signal absolu (b) et produire un signal de modulation dans le temps (c) représentant des première et seconde moitiés de chacun desdits bords avant et arrière dudit contour; et
- un moyen de modulation dans le temps (1) pour moduler dans le domaine temps ladite donnée d'image en réponse audit signal de modulation dans le temps (c) de façon que la première moitié desdits bords avant et arrière dudit contour soit retardée, et la seconde moitié desdits bords avant et arrière dudit contour soit avancée.

**2.** Dispositif pour améliorer les contours d'images selon la revendication 1, dans lequel ledit moyen de modulation dans le temps (1) comprend : une multitude de circuits à retard (21, 22, 23, 24) pour retarder ladite donnée d'image sériellement dans une multitude de stades et pour produire une multitude de sorties retardées et une sortie non-retardée; et un moyen de sélection (25) pour recevoir les sorties provenant desdits circuits à retard et pour sélectionner une sortie en conformité avec ledit signal de modulation dans le temps.

**3.** Dispositif pour améliorer les contours d'images selon la revendication 1, dans lequel ledit moyen de modulation dans le temps (1) comprend : un moyen de mémoire (10a, 10b, 10c, 10d) ayant une multitude de cellules pour mémoriser une multitude de données de pixels de ladite donnée d'image; un compteur d'écriture (11) pour produire une adresse d'écriture désignant lesdites cellules pour mémoriser lesdites données de pixels séquentiellement dans lesdites cellules, un compteur de lecture (12) pour produire une donnée d'adresse de lecture; et un moyen d'addition (13) pour additionner ladite donnée d'adresse de lecture audit signal de modulation dans le temps (c) afin de produire une donnée d'adresse de lecture modifiée qui désigne lesdites cellules pour lire lesdites données de pixels.

4. Dispositif pour améliorer les contours d'images afin d'améliorer les contours d'images dans une donnée d'image formée par une multitude de données de pixels, ledit dispositif pour améliorer les contours d'images comprenant :

- un premier moyen de différentiation (33) afin de procéder à une différentiation de ladite donnée d'image et produire un signal différentié du premier ordre (D) représentant une partie de donnée d'image qui correspond à un contour;
- un premier moyen de comparaison (35) pour détecter la polarité dudit signal différentié du premier ordre (D) et pour produire une sortie (H) indiquant la polarité dudit signal différentié du premier ordre (D);
- un second moyen de différentiation (34) afin de procéder à une différentiation dudit signal différentié du premier ordre (D) et produire, avec l'utilisation du résultat (H) de la détection dudit premier moyen de comparaison (35), un signal de modulation dans le temps (E) représentant des première et seconde moitiés de chacun desdits bords avant et arrière dudit contour;
- un second moyen de comparaison (36) pour comparer la sortie dudit second moyen de différentiation (34) à un seuil positif (F) et à un seuil négatif (G) et pour produire une première sortie (I) lorsque ledit signal de modulation dans le temps (E) dépasse un seuil positif (F) et une seconde sortie (J) lorsque ledit signal de modulation dans le temps (E) tombe au-dessous d'un seuil négatif (G);
- un moyen à retard (31, 32) pour retarder ladite donnée d'image sériellement dans une multitude de stades et pour produire une multitude de sorties retardées et une sortie non retardée; et un moyen de sélection (37) pour recevoir lesdites sorties provenant dudit moyen à retard (31, 32) et ladite sortie non retardée et pour sélectionner l'une desdites sorties en conformité avec une combinaison prédéterminée desdites sorties (H, I, J) provenant desdits premier et second moyens de comparaison (35, 36).

Fig. 1

# Fig. 2

# Fig. 3

CONTOUR
PORTION

CONTOUR
PORTION

(a)

t5

t4

tn

a

t1 t2 t3

$t$

(b)

$b = \left| \dfrac{d a}{d t} \right|$

$t$

(c)

$c = -\dfrac{d b}{d t} = \dfrac{d}{d t}\left| \dfrac{d a}{d t} \right|$

+2

+1

0

t1

t5 t6 t7 t8 t9 t10

t13

ADVANCE

DELAY

-1

t2 t3 t4

t11 t12

-2

(d)

d = a(2 cycle delayed)

t1 t2 t3 t4 t5 t6 t7 t8 t9 t10 t11 t12 t13

$t$

(e)

(S1)

(S3)

e

(S2)

$t$

t1' t2' t3' t4' t5' t6' t7' t8' t9' t10' t11' t12' t13'

# Fig. 4

READ-OUT
TIME AXIS

TIME MODULATION
CHARACTERISTICS

WRTE-IN
TIME AXIS

OUTPUT

INPUT

EP 0 454 082 B1

# Fig. 5

# Fig. 6

EP 0 454 082 B1

EP 0 454 082 B1

# Fig. 7

(a)

REFERENCE
ADVANCE
A   B   C   A   B   C
DELAY

(b)

D

(c)

E
F
G

(d)

H

(e)

I   I

(f)

J   J

B  C  B  A  B  C  B  A  B

(g)

K

(h)

L

Fig. 8   PRIOR ART

(a)

(b)

(c)

(d)